# EUROPÄISCHE PATENTANMELDUNG

(11) **EP 3 723 323 A1**
(43) Veröffentlichungstag der Anmeldung: **14.10.2020**
(21) Anmeldenummer: 20159518.8
(22) Anmeldetag: 26.02.2020
(51) Int. Cl.: H04L 12/10, H04L 12/40

(54) **NETZWERKGERÄT, VERFAHREN UND NETZWERK**

(30) Priorität: 12.04.2019 DE 102019109830
(71) Anmelder: RIEDEL Communications International GmbH, 42109 Wuppertal (DE)
(72) Erfinder: Carrera, Roberto Barbieri, 8153 Rümlang (CH); Gehri, Silvio, 8153 Rümlang (CH)
(74) Vertreter: Roche, von Westernhagen & Ehresmann

(57) **Zusammenfassung**

Die Erfindung betrifft unter anderem ein Netzwerkgerät (10), welches mit anderen Teilnehmern (18a, 18b, 12, 13) eines Netzwerkes (42), insbesondere eines Echtzeit-Intercom-Netzwerkes (42), zur Übertragung von Audio- und/oder Bildinformationen, über elektrische Leitungen (15, 16) verbindbar ist, wobei das Netzwerkgerät (10) wenigstens einen eingangsseitigen Anschluss (22a) zur Verbindung mit einer Spannungsversorgungsquelle (11) und wenigstens einen ausgangsseitigen Anschluss (22b) zur Verbindung mit wenigstens einem zweiten Netzwerkgerät (12) aufweist, wobei über die Anschlüsse Signale und Betriebsspannung (POE) in Anwendung der zumindest folgenden vier Layer (32, 33, 34, 35) übermittelbar sind:
a) PTP-Layer (Precision Time Protocol),
b) Ethernet-Layer,
c) Daten- und/oder Informationslayer,
d) POE (Power Over Ethernet) - Layer.

## Beschreibung

Die Anmelderin entwickelt und vertreibt seit über 30 Jahren Netzwerkgeräte und Netzwerke der gattungsgemäßen Art. Insbesondere befasst sich die Anmelderin mit Netzwerkgeräten und Netzwerken, die der Übertragung von Audio- und Bilddaten dienen, die im Rahmen einer Echtzeitübertragung, beispielsweise bei Radio- und Fernsehübertragungen, für Live-Events, wie Sportereignisse und Unterhaltungsveranstaltungen eingesetzt werden. Eine Unterart dieser Netzwerke bezeichnet man als Audio-Netzwerke. Hier sind die einzelnen Netzwerkgeräte als Sprechstellen ausgebildet. Jeweils zwei Sprechstellen können miteinander, insbesondere unter Zwischenschaltung einer Vermittlungsstelle, eine unmittelbare Hör- und/oder Sprechverbindung miteinander eingehen. An den einzelnen Sprechstellen können hierzu programmierbare Tasten angeordnet sein, die bei Betätigung eine solche unmittelbare Verbindung gewährleisten.

Derartige Netzwerkgeräte sind beispielsweise beschrieben in den folgenden Patentanmeldungen der Anmelderin, deren Inhalt in den Inhalt der vorliegenden Patentanmeldung miteingeschlossen wird:
DE 102014011963 A1, DE 10 2017 107 148 A1, DE 10 2017 107 150 A1, DE 10 2017 116 002 A1, DE 10 2017 116 273 A1, DE 10 2018 103 272 A1, DE 10 2018 106 257 A1, DE 10 2018 107 447 A1.

Es ist im Stand der Technik bereits bekannt, Netzgeräte von einer Spannungsversorgungseinheit mit einer elektrischen Betriebsspannung zu versorgen, wobei die Spannungsversorgung nach dem POE-Protokoll (Power Over Ethernet) betrieben wird. Es genügt dabei ein einziges, insbesondere mehraderiges Kabel, z. B. ein Ethernet-Kabel, über welches Daten, Signale und Informationen, aber zugleich auch Betriebsspannung zum Betrieb des Netzwerkgerätes übermittelt werden kann.

Hiervon ausgehend besteht die Aufgabe der Erfindung darin, ein Netzwerkgerät der bekannten Art derartig weiter zu entwickeln, dass eine einfache Spannungsversorgung mehrerer Netzwerkgeräte bei besonders sicherer Betriebsweise möglich wird.

Die Erfindung löst die Aufgabe mit den Merkmalen des Anspruches 1.

Das Prinzip der Erfindung besteht im wesentlichen darin, ein Netzwerkgerät bereitzustellen, mit dem mehrere Netzwerkgeräte in Reihe oder kettenartig miteinander gekoppelt werden, und von einer einzigen Spannungsversorgungseinheit mit elektrischer Betriebsspannung versorgt werden können.

Dabei weist das Netzwerkgerät eine Einrichtung auf, mit der Informationen ermittelbar und/oder verarbeitbar sind. Zu den Informationen gehören gemäß der Erfindung insbesondere Informationen über die eingangsseitig an dem Netzwerkgerät anliegende oder zur Verfügung gestellte elektrische Betriebsspannungsleistung. Zu den Informationen gehören des weiteren Informationen über die zum Betrieb des Netzwerkgerätes erforderliche Leistungsaufnahme. Schließlich gehören zu den Informationen auch Informationen über die zum Betrieb des zweiten Netzwerkgerätes erforderliche Leistungsaufnahme.

Die Einrichtung kann des weiteren die Summe der Leistungsaufnahmen des Netzwerkgerätes, das auch als erstes Netzwerkgerät bezeichnet wird, und des zweiten Netzwerkgerätes bilden, und diese Summe mit der eingangsseitig zur Verfügung stehenden Leistung der Spannungsversorgung vergleichen. Führt die Durchführung des Vergleiches dazu, dass die eingangsseitig anliegende Versorgungsspannung im Hinblick auf die maximal zulässige Leistung dazu ausreicht, das Netzwerkgerät und das zweite Netzwerkgerät mit Betriebsspannung zu versorgen, kann eine Schalteinrichtung angesprochen werden, die die Versorgungsspannung durchschaltet. Für den Fall, dass der Vergleich ergibt, dass die zur Verfügung gestellte Leistung nicht ausreicht, um neben dem ersten Netzwerkgerät auch noch zusätzlich das zweite Netzwerkgerät mit elektrischer Betriebsspannung zu versorgen, sorgt die Schalteinrichtung dafür, dass eine Spannungsversorgung des zweiten Netzwerkgerätes durch das erste Netzwerkgerät unterbleibt.

Die Erfindung ermöglicht also ein Re-Powering eines zweiten Netzwerkgerätes durch das erste Netzwerkgerät. Von der Erfindung ist auch umfasst, wenn weitere Netzwerkgeräte entweder unmittelbar an das erste Netzwerkgerät oder über das zweite Netzwerkgerät an das erste Netzwerkgerät angeschlossen werden. Bei einer solchen Kettenanordnung oder Kettenschaltung mehrerer Netzwerkgeräte kann die Einrichtung vorteilhaft eine entsprechende Summenbildung sämtlicher geforderter Leistungsaufnahmen durchführen, und einen Vergleich mit der anliegenden maximalen Leistung vornehmen.

Gemäß der Erfindung umfasst die Datensignalübertragung über die Leitung zwischen Spannungsversorgungseinheit und Netzwerkgerät zumindest ein PTP-Layer, also einen Precision Time Protocol Layer. Das Netzwerkgerät weist eine Vorrichtung, insbesondere ein elektrisches Bauelement, auf, mit der dieses Layer interpretiert werden kann.

Gemäß wird der Erfindung wird über die Kabelverbindung zwischen der Spannungsversorgungseinheit und dem Netzwerkgerät darüber hinaus Betriebsspannung nach dem POE-Protokoll (Power Over Ethernet) - Protokol übermittelt.

Gemäß der Erfindung ist die Spannungsversorgungsquelle oder Spannungsversorgungseinheit insbesondere von einem POE-Switch bereitgestellt.

Über die Kabelverbindung zwischen der Spannungsversorgungseinheit und dem Netzwerkgerät wird darüber hinaus ein Ethernet-Layer übermittelt. Das Netzwerkgerät umfasst insoweit zwingend auch eine Vorrichtung, insbesondere in Form eines elektronischen Bauelementes, mit der Signale gemäß dem Ethernet-Layer interpretiert werden können.

Schließlich werden über die Kabelverbindung zwischen Spannungsversorgungseinheit und dem Netzwerkgerät Signale basierend auf einem Daten-Layer übermittelt. Das Netzwerkgerät umfasst insoweit eine Vorrichtung, insbesondere ein elektronisches Bauelement, mit der dieser Datenlayer interpretiert werden kann.

Das erfindungsgemäße Netzwerkgerät dient vorteilhafterweise ausschließlich der Übertragung von Audio-Informationen.

Auf die Art der Kabelverbindung zwischen der Spannungsversorgungseinheit und dem Netzwerkgerät kommt es im Detail nicht an. Vorteilhafterweise wird ein herkömmliches Ethernet-Kabel verwendet.

Mit dem erfindungsgemäßen Netzwerkgerät kann einerseits ermöglicht werden, dass ein zweites Netzwerkgerät oder ggf. auch noch weitere Netzwerkgeräte an das Netzwerkgerät anschließbar sind, und mit Betriebsspannung nach POE-Protokoll versorgt werden können. Zugleich ist aufgrund der durch durchgeführten Vergleichsprüfung und einem etwaigen Ansprechen der Schalteinrichtung gewährleistet, dass der Versorgungsstrang und die datentechnische Verbindung zwischen der Spannungsversorgungseinheit und dem ersten Netzwerkgerät nicht wegen Überlastung beeinträchtigt wird, dies unabhängig davon, ob das zweite Netzwerkgerät (oder ein weiteres oder mehrere weitere angeschlossene Netzwerkgeräte) überhaupt mit Betriebsspannung versorgt werden können.

Schließlich wird erfindungsgemäß die Möglichkeit bereitgestellt, dass das Ergebnis der durchgeführten Vergleichsprüfung durch eine Anzeigeeinrichtung angezeigt werden kann. So kann beispielsweise eine grüne oder eine rote LED oder eine farbänderbare LED an dem Netzwerkgerät angeordnet sein, die dem Benutzer anzeigt, ob bei Anschluss eines zweiten Netzwerkgerätes an das erste Netzwerkgerät die bereitgestellte Leistung der elektrischen Betriebsspannung zur Versorgung des angeschlossenen zweiten Netzwerkgerätes ausreicht, oder nicht.

Gemäß der Erfindung ist die Einrichtung an dem Netzwerkgerät angeordnet. Auch die Prüfeinrichtung ist bei dem Ausführungsbeispiel der Erfindung an dem Netzwerkgerät angeordnet. Von der Erfindung ist aber auch umfasst, wenn die Prüfvorrichtung nicht an dem Netzwerkgerät, sondern an der Spannungsversorgungseinheit angeordnet ist, und von der Spannungsversorgungseinheit die entsprechende Prüfung, also der Vergleich der zur Verfügung stehenden Versorgungsleistung mit der nachfolgenden Versorgungsleistung, durchgeführt wird. In diesem Falle ist die Einrichtung an dem Netzwerkgerät angeordnet, und empfängt die Informationen einschließlich der Informationen über das Ergebnis der durchgeführten Prüfung. Hier kann die Einrichtung basierend auf den erhaltenen Prüfergebnissen ein Ansprechen der Schalteinrichtung vornehmen oder nicht vornehmen, und ein Ansprechen der Anzeigeeinrichtung veranlassen.

Die Erfindung bezieht sich gemäß einem weiteren Aspekt auf ein Verfahren nach Anspruch 9.

Ausgehend von einem druckschriftlich nicht belegbaren Verfahren des Standes der Technik der zuvor beschriebenen Art, besteht die Aufgabe der Erfindung darin, ein besonders einfaches Verfahren zur Versorgung mehrerer Netzwerkgeräte mit Betriebsspannung anzugeben, das besonders sicher ist.

Die Erfindung löst diese Aufgabe mit den Merkmalen des Anspruches 9.

Bezüglich der Erläuterung des Verfahrens, und bezüglich der Auslegung des Verständnisses der Merkmale des Anspruches 9 wird auf die obigen Ausführungen zu den Ansprüchen 1 bis 8 verwiesen, auf die zur Vermeidung von Wiederholungen zurückgegriffen werden soll, und die für das Verfahren nach Anspruch 9 analog gelten.

Die Erfindung betrifft des weiteren ein Netzwerk nach Anspruch 12.

Der Erfindung liegt die Aufgabe zugrunde, ein Netzwerk anzugeben, welches auf besonders einfache Weise mehrere Teilnehmer, also mehrere Netzwerkgeräte, mit Betriebsspannung unter Nutzung des POE-Protokolls versorgen kann.

Die Erfindung löst diese Aufgabe mit den Merkmalen des Anspruches 12.

Bezüglich der Vorteile des Netzwerkes nach Anspruches 12 und bezüglich der Auslegung des Verständnisses der Merkmale des Anspruches 12 wird auf die obigen Ausführungen zu den Ansprüchen 1 bis 11 verwiesen, auf die zur Vermeidung von Wiederholungen zurückgegriffen werden soll, und die für das Netzwerk nach Anspruch 12 analog gelten.

Weitere Vorteile der Erfindung ergeben sich aus den nicht zitierten Unteransprüchen sowie anhand der nachfolgenden Beschreibung der in den Zeichnungen dargestellten Ausführungsbeispiele. Darin zeigen:
- Fig. 1: in einer schematischen blockschaltbildartigen Darstellung ein Ausführungsbeispiel eines erfindungsgemäßen Netzwerkes, welches als Intercom-Netzwerk und zugleich als Netzwerk zur Übertragung von Bilddaten ausgebildet ist, wobei zwei Vermittlungsstellen, drei stationäre Sprechstellen, eine mobile Sprechstelle, eine Kamera und eine als Belt-Pack ausgebildete Sprechstelle vorgesehen sind, wobei der Belt-Pack von einer Bedienperson getragen wird, wobei an das Belt-Pack ein Headset angeschlossen ist, und wobei das Belt-Pack mit der Vermittlungsstelle über ein Kabel verbunden ist,
- Fig. 2: eine Kettenanordnung eines ersten Netzwerkgerätes, welches eingangsseitig mit einer Spannungsversorgungseinheit verbunden ist, und welches ausgangsseitig mit einem zweiten Netzwerkgerät verbunden ist, in schematischer, blockschaltbildartiger und abgebrochener Darstellung,
- Fig. 3: die vier Layer umfassende Schichtstruktur in einer schematischen Darstellung zur Verdeutlichung der über die Kabelverbindung zwischen Spannungsversorgungseinheit und einem ersten Netzwerkgerät sowie über die Kabelverbindung zwischen dem ersten Netzwerkgerät und dem zweiten Netzwerkgerät übertragenen Informationen, Signale, Daten sowie die übertragene Betriebsspannung,
- Fig. 4: in einer blockschaltbildartigen Darstellung in Einzelansicht die Spannungsversorgungseinheit der Fig. 4 etwa gemäß Teilkreis IV in Fig. 2,
- Fig. 5: in einer blockschaltbildartigen Darstellung analog zu der Darstellung gemäß Fig. 4 das Ausführungsbeispiel des erfindungsgemäßen Netzwerkgerätes gemäß Fig. 2, etwa gemäß Teilkreis V in Fig. 2, in Alleindarstellung,
- Fig. 6: in einer Darstellung gemäß Fig. 5 ein Ausführungsbeispiel eines erfindungsgemäßen zweiten Netzwerkgerätes gemäß der Fig. 2 in Einzeldarstellung, etwa gemäß Teilkreis VI in Fig. 2,
- Fig. 7: in einer Darstellung gemäß Fig. 1 ein weiteres Ausführungsbeispiel eines erfindungsgemäßen Netzwerks unter Verwendung mehrerer erfindungsgemäßer Netzwerkgeräte, wobei an das Belt-Pack der Fig. 1 ein zweites Netzwerkgerät in Form eines zweiten Belt-Packs angeschlossen ist, und an das zweite Netzwerkgerät, also an das zweite Belt-Pack, ein drittes Netzwerkgerät in Form eines dritten Belt-Packs angeschlossen ist, und
- Fig. 8: in einer vergrößerten schematischen Detaildarstellung ein Ausführungsbeispiel eines erfindungsgemäßen, als Belt-Pack ausgebildeten Netzwerkgerätes, mit einem daran angeschlossenen Headset in vergrößerter, teilweise perspektivischer und schematischer Darstellung.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

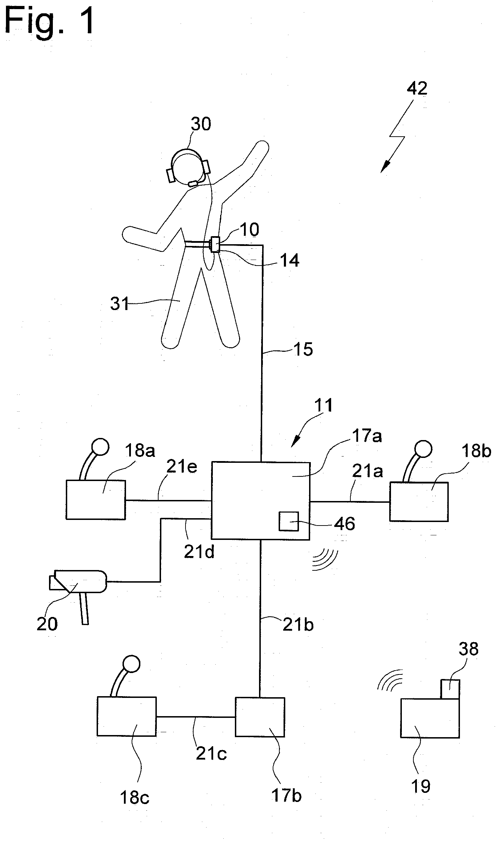

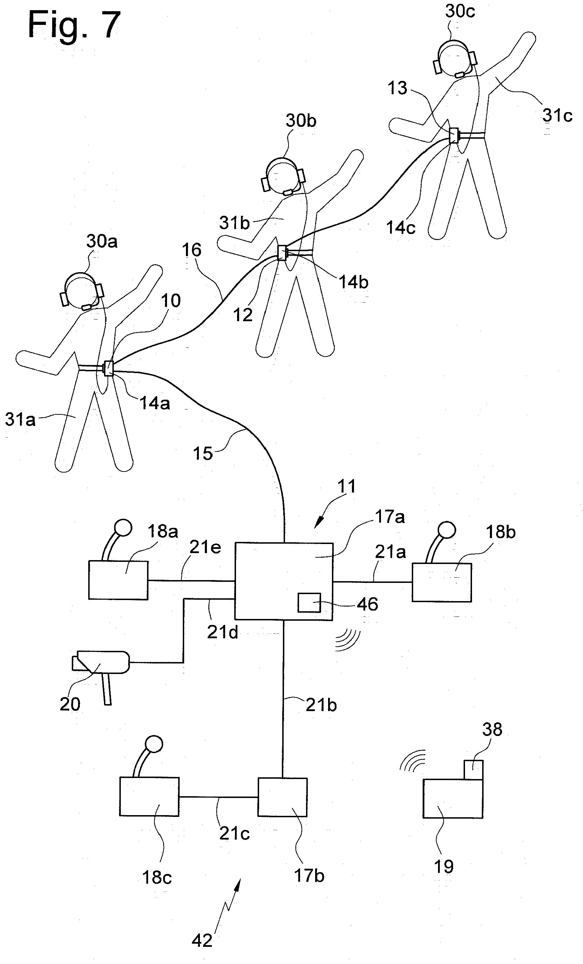

Ein Ausführungsbeispiel eines erfindungsgemäßen Netzwerks 42 ist in Fig. 1 und ein zweites Ausführungsbeispiel eines erfindungsgemäßen Netzwerkes 42 ist in Fig. 7 dargestellt.

Ausweislich Fig. 1 kann ein Netzwerk 42 gemäß Fig. 1 eine erste Vermittlungsstelle 17a und eine zweite Vermittlungsstelle 17b umfassen. Diese können durch die Verbindungsleitung 21b miteinander verbunden sein.

An die Vermittlungsstelle 17b kann über eine Leitung 21c eine stationäre Sprechstelle 18c angebunden sein.

An die Vermittlungsstelle 17a können über Verbindungsleitungen 21a, 21c, 21d weitere stationäre Sprechstellen 18b, 18a und auch eine Kamera 20 angeschlossen sein. Darüber hinaus ist an die Vermittlungsstelle 17a über eine drahtlose Verbindung unter Zuhilfenahme eines an der Vermittlungsstelle 17a angeordneten Sende- oder Empfangmoduls 46 ein mobiler Teilnehmer 19, also eine mobile Sprechstelle oder ein mobiles Netzwerkgerät 19, angeschlossen, das unter Zuhilfenahme eines Sende- oder Empfangsmoduls drahtlos mit dem Sende- und Empfangsmodul 46 kommunizieren kann.

Die Zahl der Vermittlungsstellen 17a, 17b und die Zahl der angeschlossenen Teilnehmer 18a, 18b, 18c, 19, 20 ist beliebig.

Ausweislich Fig. 1 ist an die Vermittlungsstelle 17a über eine erste Leitung 15, in dem Ausführungsbeispiel der Fig. 1 über ein Ethernet-Kabel 15, ein Netzwerkgerät 10 in Form ein Belt-Pack 14 angeschlossen. Das Belt-Pack 14 wird an einem Gürtel von einer Bedienperson 31 getragen. Mit dem Belt-Pack 14 ist ein Headset 30 verbunden.

Während im Stand der Technik Belt-Packs bekannt sind, die drahtlos mit der Vermittlungsstelle 17a kommunizieren, ähnlich, wie dies der Teilnehmer 19 unter Zuhilfenahme der Sende- und Empfangseinheiten 38 und 46 vornimmt, geht es der Erfindung vorliegend um kabelgebundene Netzwerkgeräte, die unmittelbar oder mittelbar mit der Vermittlungsstelle 17a - oder mit einer Spannungsversorgungseinheit - verbunden sind. Weiter betrifft die Erfindung ausschließlich solche Netzwerkgeräte 10, die von der Vermittlungsstelle 17a nicht nur Daten und Informationen erhalten und die einen bidirektionalen Austausch von Daten- und Audio-Informationen vornehmen können, sondern, die zugleich von der Vermittlungsstelle 17a auch mit Betriebsspannung versorgt werden.

Gemäß des Ausführungsbeispiels der Fig. 1 dient die Vermittlungsstelle 17a also insoweit auch als Spannungsversorgungseinheit 11 für das Netzwerkgerät 10. Zugleich kann die Vermittlungsstelle 17a auch als Spannungsversorgungseinheit 11 für die weiteren angeschlossenen Teilnehmer 18a, 18b und 20 dienen.

In bestimmten Fällen ist es wünschenswert, wenn an ein Netzwerkgerät 10 gemäß Fig. 1 unmittelbar noch weitere Netzwerkgeräte 12, 13 über weitere Kabel 16, 43, wie in Fig. 7 dargestellt, angeschlossen werden können. Während das Netzwerkgerät 10 gemäß Fig. 7 weiter von der Spannungsversorgungseinheit 11 mit Betriebsspannung versorgt wird, sollen aber in bestimmten Anwendungsfällen auch die nachfolgend angeschlossenen Netzwerkgeräte, namentlich das zweite Netzwerkgerät 12 und das dritte Netzwerkgerät 13 sowie ggf. noch weitere Netzwerkgeräte, von der Spannungsversorgungseinheit 11 mit Betriebsspannung versorgt werden können. Es handelt sich insoweit um eine Kette oder Kettenanordnung mehrerer Netzwerkgeräte.

Die Erfindung bezieht sich dabei ausschließlich auf solche Netzwerkgeräte, die über die Leitung, z. B. über ein Ethernet-Kabel, Signale, Informationen, Daten und Betriebsspannung (POE - Power Over Ethernet - Betriebsspannung) in Anwendung eines besonderen Schichtenmodels übermitteln:

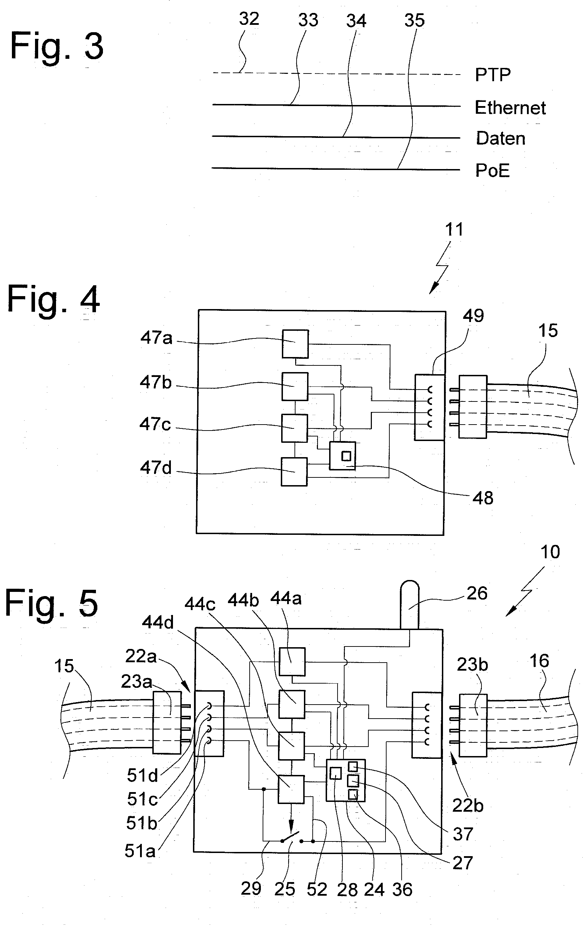

Fig. 3 zeigt in einer schematischen Darstellung die wenigstens vier unterschiedlichen Layer oder Schichten, die das erfindungsgemäße Netzwerkgerät verstehen können muss:
Ein erstes Layer 32 ist das PTP-Layer (Precision Time Protocol), welches die Clock oder das Zeitsignal oder den Zeitstempel vorgibt. Dieses ist bei den vorliegend zu betrachtenden Echtzeit-Netzwerken, um die es der Erfindung ausschließlich geht, von essentieller Bedeutung.

Das zweite Layer 33 ist der Ethernet-Layer. Dieses bedient sich des an sich bekannten Ethernet-Protokolls.

Das dritte Layer 34 ist das eigentliche Daten- oder Informationslayer. Hiermit werden Audiodaten oder Bilddaten in Echtzeit übermittelt.

Das vierte Layer 35 ist das POE-Layer. Hier wird im Rahmen einer an sich bekannten Power Over Ethernet Protokoll-Anforderung Betriebsspannung übertragen.

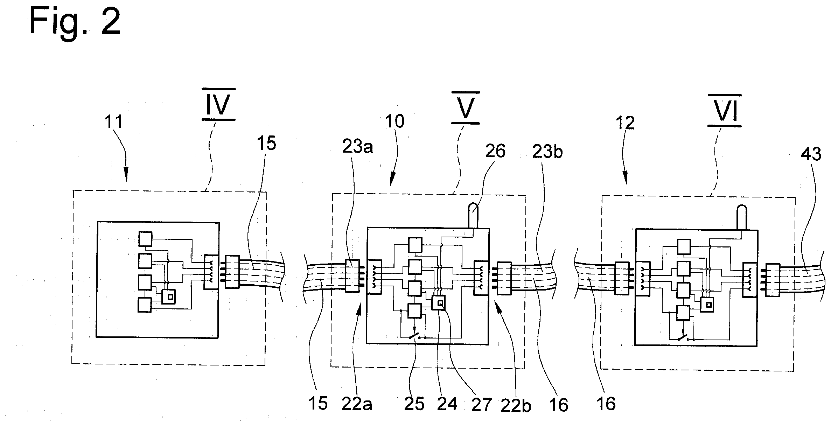

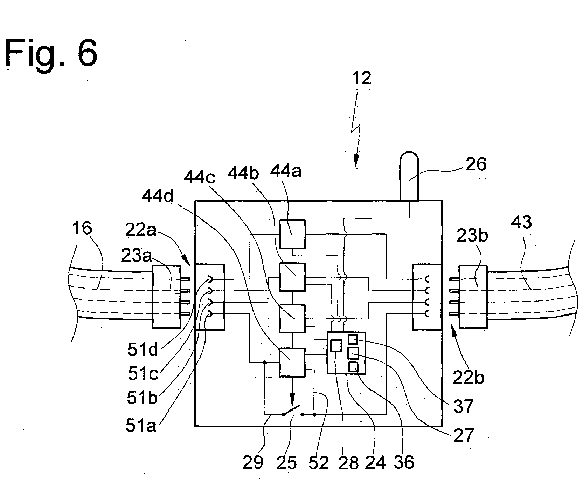

Unter Bezugnahme auf die Figuren 2 und 4 bis 6 soll nun die erfindungsgemäße Besonderheit eines Netzwerkgerätes 10, eines erfindungsgemäßen Verfahrens, und eines erfindungsgemäßen Netzwerks erläutert werden:
Ausweislich Fig. 2 ist die Kette oder Kettenanordnung, gebildet von der Spannungsversorgungseinheit 11, dem Netzwerkgerät 10 und dem zweiten Netzwerkgerät 12, dargestellt. Diese Kette kann durch Anbringung weiterer Netzwerkgeräte, z. B. eines dritten Netzwerkgerätes 13 gemäß Fig. 7, welches in Fig. 2 nicht dargestellt ist, sowie ggf. durch ein viertes Netzwerkgerät, ein fünftes usw., beliebig fortgesetzt werden. Angemerkt sei, dass das dritte Netzwerkgerät vorteilhafterweise unmittelbar mit dem zweiten Netzwerkgerät verbunden wird. Bei einem weiteren, in den Zeichnungen nicht dargestellten, Ausführungsbeispiel der Erfindung kann ein drittes Netzwerkgerät 13 aber auch unmittelbar mit dem Netzwerkgerät 10 verbunden werden.

Weiter sei angemerkt, dass ausweislich Fig. 2 das Netzwerkgerät 10 über eine Leitung 15 mit einer Spannungsversorgungseinheit 11 verbunden ist. Die Spannungsversorgungseinheit 11 ist bei dem Ausführungsbeispiel der Fig. 1 und 7 zugleich eine Vermittlungsstelle 17a, 17b des Netzwerkes 42.

Bei weiteren Ausführungsbeispielen ist die Spannungsversorgungseinheit 11 aber keine Vermittlungsstelle des Netzwerkes 42, sondern ist, vorteilhafterweise, aber nicht zwingend, mit einer solchen Vermittlungsstelle verbunden.

Auch sind von der Erfindung Netzwerke umfasst, die ohne eine Vermittlungsstelle auskommen, und beispielsweise dezentral eine Vermittlung durchführen.

Weiter ist bei Ausführungsbeispielen der Erfindung insbesondere vorgesehen, dass die Spannungsversorgungseinheit 11 von einem POE-Switch gebildet ist oder bereitgestellt ist.

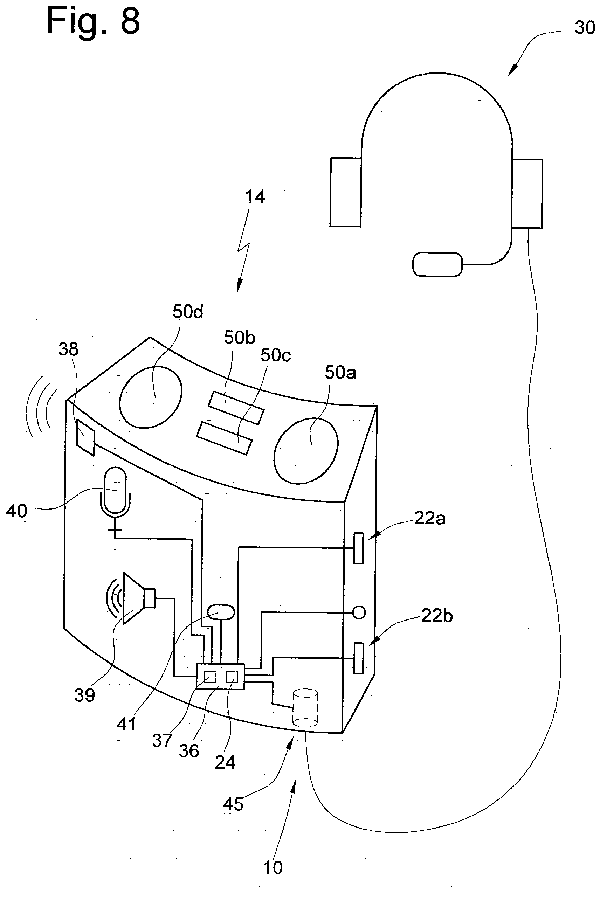

Vorzugsweise bezieht sich die Erfindung auf Netzwerkgeräte, die zur Herstellung einer unmittelbaren Hör-Sprech-Verbindung eine Vielzahl von programmierbaren Betätigungselementen 50a, 50b, 50c, 50d (vgl. Fig. 8) aufweisen, infolge deren Betätigung ein Netzwerkgerät, z. B. das Netzwerkgerätes 10, eine unmittelbare Hör-und-Sprech-Verbindung mit der Bedienperson eines anderen Netzwerkgerätes, z. B. einer stationären Sprechstelle 18a, eingehen kann. Gleichermaßen sind an den Sprechstellen 18a, 18b, 18c entsprechende, nicht dargestellte, programmierte Betätigungselemente vorgesehen.

Angemerkt sei an dieser Stelle des weiteren, dass das erfindungsgemäße Netzwerkgerät vorteilhafterweise mobil ausgebildet ist, aber nicht zwingend mobil ausgebildet sein muss. Auch die stationären Teilnehmer 18a, 18b, 18c sind als Netzwerkgeräte im Sinne der vorliegenden Patentanmeldung anzusehen.

Gemäß Fig. 2 ist die Spannungsversorgungseinheit 11 über eine Leitung 15 mit dem Netzwerkgerät 10 verbunden. Das Netzwerkgerät 10 weist hierfür einen ersten Anschluss 22a auf, der auch als eingangsseitiger Anschluss bezeichnet wird. Des weiteren weist das Netzwerkgerät 10 einen zweiten Anschluss 22b zur Verbindung des Netzwerkgerätes 10 mit einem zweiten Netzwerkgerät 12 über eine zweite Leitung 16 auf. Der zweite Anschluss 22b wird auch als ausgangsseitiger Anschluss bezeichnet.

An dem eingangsseitigen Anschluss 22a liegt das vier Layer umfassende komplexe Signal bzw. die komplexe Spannung an. Die Signale und Spannungen können bei einer mehraderigen, z. B. achtaderigen Leitung, auf verschiedenen elektrischen Leitungen anliegen.

Das Netzwerkgerät 10 umfasst entsprechende Kontaktelemente 51a, 51b, 51c, 51d, wobei die Zahl der Kontaktelemente der Zahl der in der Leitung 15 vorgesehenen elektrischen Leitern entspricht, oder entsprechen kann. Die Kontaktelemente 51a, 51b, 41c, 51d sind mit einem oder mit mehreren elektronischen Bauelementen 44a, 44b, 44c, 44d verbunden, wobei diese auch von einer einzigen elektronischen Baueinheit zusammengefasst bereitgestellt werden können. Die elektronischen Bauelemente 44a, 44b, 44c, 44d können die über die Leitung 15 eingehenden Signale und Spannungen verarbeiten, ggf. trennen, modulieren, verstärken, synchronisieren, weiterleiten etc.

Das Netzwerkgerät 10 umfasst einen eingangsseitigen Anschluss 22a, der nach Art einer Buchse ausgebildet ist, und der Aufnahme eines entsprechenden Steckers 23a der Leitung 15 dient.

In dem Netzwerkgerät 10 ist gemäß Fig. 5 eine Einrichtung 24 angeordnet, die Bestandteil einer Steuerung 36 des Netzwerkes 10 sein kann, oder von dieser gesondert ausgebildet sein kann. Des weiteren weist das Netzwerkgerät 10 eine Prüfvorrichtung 37 auf, mit der eine Vergleichsprüfung durchgeführt werden kann. Auch die Prüfvorrichtung 37 kann gesonderter Bestandteil der Einrichtung 37 oder der Steuerung 36 sein, oder mit einem der vorgenannten elektronischen Bauelemente oder mit beiden vorgenannten elektronischen Bauelementen eine Einheit bilden. Bestandteil des Netzwerkgerätes 10 ist darüber hinaus vorteilhaft wenigstens ein Prozessor 27 oder eine Recheneinheit, die ebenfalls in Fig. 5 nur schematisch, nach Art eines Blockschaltbildes, dargestellt ist.

Die Einrichtung 24 ist dazu ausgebildet, eine an dem eingangsseitigen Anschluss 22 eingehende Information über die maximale Versorgungsleistung, die von der Spannungsversorgungseinheit 11 bereitgestellt wird, zu ermitteln. Die Ermittlung kann erfolgen, indem ein über die Leitung 15 eingehendes entsprechendes Signal empfangen und verarbeitet wird. Von der Erfindung ist auch umfasst, wenn die Einrichtung 24 eine entsprechende Abfrage nach der maximal zulässigen Versorgungsleistung bei der Spannungsversorgungseinheit 11 stellt, und gemäß der Abfrage auswertet.

Die Einrichtung 24 ist darüber hinaus in der Lage, von dem zweiten Netzwerkgerät 12 eine Information zu empfangen, ggf. durch Abfragen, welche Versorgungsleistung von dem zweiten Netzwerkgerät 12 benötigt wird. Darüber hinaus ist die Einrichtung 24 in der Lage, festzustellen, welche Leistungsaufnahme das Netzwerkgerät 10 selbst benötigt. Diese Information kann beispielsweise in einem Speicher 28 des Netzwerkgerätes 10 abrufbar abgelegt sein, z. B. ab Werk herstellerseitig gespeichert sein.

Die Einrichtung 24 kann, insbesondere in Zusammenwirken mit der Prüfvorrichtung 37, sodann die von dem Netzwerkgerät 10 benötigte Leistungsaufnahme und die von dem zweiten, angeschlossenen Netzwerkgerät 12 benötigte Leistungsaufnahme addieren, und diese Summe mit der eingangsseitig zur Verfügung gestellten maximalen Versorgungsleistung vergleichen.

Schließlich kann die Prüfvorrichtung 37 feststellen, ob die eingangsseitig anliegende Versorgungsleistung ausreicht, um sowohl das Netzwerkgerät 10, als auch das zweite Netzwerkgerät 12 mit Betriebsspannung nach dem POE-Protokoll zu versorgen. Ist dies der Fall, kann die Einrichtung 24 und/oder die Prüfvorrichtung 37 eine Schalteinrichtung 25 ansprechen, die infolge der Schaltung dafür sorgt, dass das zweite Netzwerkgerät 12 über das Netzwerkgerät 10 von der Spannungsversorgungseinheit 11 mit POE-Betriebsspannung versorgt wird.

Zugleich kann die Einrichtung 24 und/oder die Prüfvorrichtung 37 veranlassen, dass das Ergebnis der durchgeführten Prüfung über eine Anzeigeeinrichtung 26 als eine von einer Bedienperson erkennbare Information angezeigt wird. So kann die Anzeigeeinrichtung 26 beispielsweise eine grüne und/oder eine rote LED oder eine farbänderbare LED umfassen. Für den Fall, dass die Versorgungsspannungsleistung ausreicht, auch das zweite angeschlossene Netzwerkgerät 12 mit Betriebsspannung zu versorgen, kann die LED beispielsweise grün leuchten, und für den Fall nicht ausreichender Versorgungsspannung kann die LED so angesteuert werden, dass sie rotes Licht emittiert.

Angemerkt sei, dass auch für den Fall, dass die Versorgungsspannung nicht ausreicht, sowie für den Fall einer einer Prüfung vorgeschalteten Abfrage der von dem zweiten Netzwerkgerät 12 benötigten Versorgungsleistung, über das elektronische Bauelement 44d und den Leitungszweig 52, das an das Netzwerkgerät 10 angeschlossene zweite Netzwerkgerät 12 mit einer leistungsreduzierten POE-Versorgungsspannung versorgt werden kann. Diese wird aber nur für die Abfrage verwendet, und reicht nicht aus, um das zweite Netzwerkgerät 12 mit Betriebsspannung zu versorgen. Erst, wenn die Prüfung, ob eine ausreichende Versorgungsspannung bereitsteht, positiv ausfällt, wird durch Ansprechen der Schalteinrichtung 25 der entsprechende Zweig der POE-Versorgungsspannungsleitung 29 durchgeschaltet, der die zum Betrieb des zweiten Netzwerkgerätes 12 erforderliche Versorgungsspannung in ausreichender Leistungshöhe bereitstellt oder durchschaltet.

An der Spannungsversorgungseinheit 11 sind ausweislich Fig. 4 entsprechende elektronische Bauelemente 47a, 47b, 47c, 47d angeordnet, die einerseits für eine entsprechende Aufmodulierung der Signale und POE-Betriebsspannung nach dem zuvor beschriebenen Vier-Layer-Protokoll sorgen, andererseits für eine Demodulation und Interpretation der von dem ersten Netzwerkgerät 10 empfangenen Signale und Informationen sorgen. Selbstverständlich ist die Spannungsversorgungseinheit 11 mit einer angedeuteten Steuerung 48 ausgestaltet, und weist einen entsprechenden Anschluss 49 zur Verbindung über die Leitung 15 mit dem ersten Netzwerkgerät 10 auf.

Fig. 8 verdeutlicht, dass an dem als Belt-Pack ausgebildeten Netzwerkgerät 10 der eingangsseitige Anschluss 22a und der ausgangsseitige Anschluss 22b nach Art von Buchsen angeordnet sein kann. Fig. 8 macht darüber hinaus deutlich, dass gemäß der deutschen Patentanmeldung DE 10 2017 116 002 A1 an dem Belt-Pack 14 auch ein zusätzlicher Lautsprecher 39 und ein zusätzliches Mikrofon 40 angeordnet sein kann, die von einem Schalter 41 angesprochen werden können. Diesbezüglich wird zur Vermeidung von Wiederholungen verwiesen auf die erwähnte Patentanmeldung der Anmelderin.

Das Netzwerkgerät 10 in Form des Belt-Packs 14 gemäß Fig. 8 weist insbesondere auch einen Anschluss 45 zur Anbindung eines Headsets 30 auf.

Angemerkt sei, dass die Spannungsversorgungseinheit 11 und das erste Netzwerkgerät 10 und das zweite Netzwerkgerät 12 zwingend unter Anwendung der vier Layer 32, 33, 34, 35 gemäß Fig. 3 miteinander kommunizieren. Von der Erfindung ist auch umfasst, wenn noch weitere zusätzliche Layer vorgesehen sind.

Von der Erfindung sind auch weitere, nicht dargestellte Ausführungsbeispiele umfasst, bei denen die Prüfvorrichtung 37 nicht Bestandteil des Netzwerkgerätes 10, sondern Bestandteil der Spannungsversorgungseinheit 11 ist. In diesem Falle übermittelt das Netzwerkgerät 10 Informationen über die zum Betrieb des Netzwerkgerätes 10 erforderliche Versorgungsspannungsleistung als auch Informationen über die zum Betrieb des an das Netzwerkgerät 10 angeschlossenen zweiten Netzwerkgerätes 12 erforderliche Spannungsversorgungsleistung an die Spannungsversorgungseinheit. Die Prüfvorrichtung 37 an der Spannungsversorgungseinheit 11 kann dann die entsprechende Vergleichsprüfung durchführen. Das Netzwerkgerät 10 kann von der Spannungsversorgungseinheit 11 eine Information erlangen, ob die Versorgungsspannungsleistung ausreicht, um das Netzwerkgerät 10 und das angeschlossene zweite Netzwerkgerät 12 mit Spannung zu versorgen. Entsprechend kann nach Erhalt dieser Information das Netzwerkgerät 10 veranlassen, dass die Schalteinrichtung 25 in dem entsprechenden Sinne angesprochen oder nicht angesprochen wird, und veranlassen, dass die Anzeigeeinrichtung 26 entsprechend angesprochen wird.

## Patentansprüche

1. Netzwerkgerät (10), welches mit anderen Teilnehmern (18a, 18b, 12, 13) eines Netzwerkes (42), insbesondere eines Echtzeit-Intercom-Netzwerkes (42), zur Übertragung von Audio- und/oder Bildinformationen, über elektrische Leitungen (15, 16) verbindbar ist, wobei das Netzwerkgerät (10) wenigstens einen eingangsseitigen Anschluss (22a) zur Verbindung mit einer Spannungsversorgungsquelle (11) und wenigstens einen ausgangsseitigen Anschluss (22b) zur Verbindung mit wenigstens einem zweiten Netzwerkgerät (12) aufweist, wobei über die Anschlüsse Signale und Betriebsspannung (POE) in Anwendung der zumindest folgenden vier Layer (32, 33, 34, 35) übermittelbar sind:
a) PTP-Layer (Precision Time Protocol),
b) Ethernet-Layer,
c) Daten- und/oder Informationslayer,
d) POE (Power Over Ethernet) - Layer,
wobei an dem Netzwerkgerät (10) eine Einrichtung (24) zur Verarbeitung der über die Leitungen empfangbaren Signale und der POE-Betriebsspannung angeordnet ist, wobei mit der Einrichtung eine Information über eine eingangsseitig maximal zur Verfügung stehende POE-Versorgungsleistung empfangbar und/oder abfragbar und/oder verarbeitbar ist, und mit der eine Information von dem zweiten Netzwerkgerät (12) über eine wenigstens von dem zweiten Netzwerkgerät benötigte Leistungsaufnahme empfangbar und/oder abfragbar und weiterverarbeitbar ist, wobei der Einrichtung (24) eine insbesondere an dem Netzwerkgerät angeordnete Prüfvorrichtung (37) zugeordnet ist, die in Kenntnis der benötigten Leistungsaufnahme des Netzwerkgerätes prüft, ob die eingangsseitig zur Verfügung gestellte Versorgungsleistung zur Versorgung des Netzwerkgerätes (10) und des wenigstens zweiten Netzwerkgerätes (12) ausreicht.

2. Netzwerkgerät nach Anspruch 1, **dadurch gekennzeichnet, dass** dieses als Sprechstelle ausgebildet ist.

3. Netzwerkgerät nach Anspruch 1 oder 2, **dadurch gekennzeichnet, dass** dieses als mobiles Endgerät (14), insbesondere als Belt-Pack (14), ausgebildet ist.

4. Netzwerkgerät nach einem der vorangegangenen Ansprüche, **dadurch gekennzeichnet, dass** die Prüfvorrichtung (37) für den Fall, dass die Versorgungsleistung ausreicht, eine Schalteinrichtung (25) anspricht, um das zweite Netzwerkgerät (12) mit POE-Betriebsspannung zu versorgen.

5. Netzwerkgerät nach einem der vorangegangenen Ansprüche, **dadurch gekennzeichnet, dass** die Prüfvorrichtung (37) nach erfolgter Prüfung eine Anzeigeeinrichtung (26) anspricht, die signalisiert, dass das zweite Netzwerkgerät (12) mit Betriebsspannung versorgt wird, und/oder signalisiert, dass das zweite Netzwerkgerät nicht mit Betriebsspannung versorgt wird.

6. Netzwerkgerät nach einem der vorangegangenen Ansprüche, **dadurch gekennzeichnet, dass** an das Netzwerkgerät (10) unmittelbar oder mittelbar über das zweite Netzwerkgerät (12) wenigstens ein weiteres Netzwerkgerät (13), insbesondere wenigstens ein drittes Netzwerkgerät (13), anschließbar ist.

7. Netzwerkgerät nach Anspruch 6, **dadurch gekennzeichnet, dass** die Prüfvorrichtung (37) dazu ausgebildet ist, in die Prüfung, ob die Versorgungsleistung ausreicht, die geforderten Leistungsaufnahmen des Netzwerkgerätes (10), des zweiten Netzwerkgerätes (12) und wenigstens eines weiteren Netzwerkgerätes (13) mit einbezieht.

8. Netzwerkgerät nach einem der vorangegangenen Ansprüche, **dadurch gekennzeichnet, dass** die Leitung von einem Ethernet-Kabel (15, 16) bereitgestellt ist.

9. Verfahren zur Versorgung von Netzwerkgeräten (10, 12, 13) als Teilnehmer eines Netzwerkes (42) mit Betriebsspannung, nach dem POE-Protokoll, umfassend die folgenden Schritte:
i) Bereitstellen einer Spannungsversorgungseinheit (11), insbesondere eines Switchs,
ii) Bereitstellen eines Netzwerkgerätes (10),
iii) Bereitstellen wenigstens eines weiteren zweiten Netzwerkgeräte (12), wobei das Netzwerkgerät (10) über eine erste Leitung (15) mit der Spannungsversorgungseinheit (11) und über eine zweite Leitung (16) mit dem zweiten Netzwerkgerät (12) verbunden ist,
iv) Übermitteln von Signalen und Daten sowie POE-Betriebsspannung entsprechend zumindest der folgenden vier Layer
a) PTP-Layer (Precision Time Protocol),
b) Ethernet-Layer,
c) Daten- und/oder Informationslayer,
d) POE (Power Over Ethernet) - Layer,
über die Leitung (15) zwischen der Spannungsversorgungseinheit (11) und dem Netzwerkgerät (12),
v) Ermitteln einer eingangsseitig am Netzwerkgerät (10) bereitgestellten maximalen Versorgungsleistung der elektrischen Versorgungsspannung, insbesondere durch Empfangen entsprechender Informationen von der Spannungsversorgungseinheit durch das Netzwerkgerät oder durch Abrufen entsprechender Informationen,
vi) Ermitteln der erforderlichen Leistungsaufnahme des ersten Netzwerkgerätes (10),
vii) Ermitteln der zum Betrieb des zweiten Netzwerkgerätes (12) erforderlichen Leistungsaufnahme durch das Netzwerkgerät (10), insbesondere durch Empfangen von Informationen von dem zweiten Netzwerkgerät (12) oder durch Abrufen von Informationen von dem zweiten Netzwerkgerät (12) durch das Netzwerkgerät (10),
viii) Vergleichen der Summe der Leistungsaufnahme des Netzwerkgerätes (10) und der Leistungsaufnahme des zweiten Netzwerkgerätes (12) mit der eingangsseitig am Netzwerkgerät (10) bereitgestellten Versorgungsleistung.

10. Verfahren nach Anspruch 9, **gekennzeichnet durch** den Schritt:
ix) Im Falle des Vorliegens ausreichender elektrischer Betriebsspannung-Versorgungsleistung, Ansprechen einer Schalteinrichtung (26) zur Versorgung des zweiten Netzwerkgerätes mit Betriebsspannung nach dem POE-Protokoll.

11. Verfahren nach Anspruch 9 oder 10, **dadurch gekennzeichnet, dass** in Abhängigkeit des Ergebnisses der durchgeführten Prüfung eine Anzeigeeinrichtung (26) angesprochen wird, die an dem Netzwerkgerät (10) anzeigt, ob das zweite Netzwerkgerät (12) mit Betriebsspannung versorgt werden kann.

12. Netzwerk (42), insbesondere Intercom-Netzwerk, umfassend eine Vielzahl von insbesondere als Sprechstellen ausgebildeten Netzwerkgeräten (10, 12, 13, 18a, 18b), wobei ein erstes Netzwerkgerät (10) über eine Leitung (15) mit einer Spannungsversorgungseinheit (11), insbesondere mit einem Switch, verbunden ist, wobei über die Leitung (15) Daten, Informationen, Signale und Betriebsspannung unter Verwendung zumindest der folgenden vier Layer übermittelt werden
a) PTP-Layer (Precision Time Protocol),
b) Ethernet-Layer,
c) Daten- und/oder Informationslayer,
d) POE (Power Over Ethernet) - Layer,
wobei die Versorgung des ersten Netzwerkgerätes (10) mit Betriebsspannung von der Spannungsversorgungseinheit (11) dem POE (Power Over Ethernet) - Protokoll unterliegt, wobei das erste Netzwerkgerät (10) über eine weitere Leitung (16) mit einem zweiten Netzwerkgerät (12) verbindbar ist, und wobei an dem ersten Netzwerkgerät (10) eine Einrichtung (24) angeordnet ist, mit der eine Prüfung durchführbar ist, ob an dem ersten Netzwerkgerät (10) eingangsseitig eine ausreichend große Versorgungsspannungsleistung anliegt, die ausreichend ist, um das erste Netzwerkgerät (10) und das zweite Netzwerkgerät (12) mit Betriebsspannung zu versorgen.

13. Netzwerk nach Anspruch 12, **dadurch gekennzeichnet, dass** dem ersten Netzwerkgerät (10) eine Anzeigeeinrichtung (26) zugeordnet ist, mit der anzeigbar ist, ob ein an das erste Netzwerkgerät (10) angeschlossenes zweites Netzwerkgerät (12) nach dem POE-Protokoll mit elektrischer Versorgungsspannung versorgbar ist.
